# FASCICULE DE BREVET EUROPEEN

(11) **EP 1 662 160 B1**
(45) Date de publication et mention de la délivrance du brevet: **06.01.2010**
(21) Numéro de dépôt: 05111201.9
(22) Date de dépôt: 24.11.2005
(51) Int. Cl.: F16C 33/66, F16C 33/78

(54) **Compensation de sous-alimentation en lubrifiant dans un palier inter arbres**
Wellenwälzlager mit Ölmangelzustandausgleich
Journal bearing comprising a compensation for lack of lubricant

(30) Priorité: 29.11.2004 FR 0452798
(43) Date de publication de la demande: 31.05.2006
(73) Titulaire: SNECMA, 75015 Paris (FR)
(72) Inventeur: Plona, Daniel Georges, 77870 Vulaines sur Seine (FR)
(74) Mandataire: Poulin, Gérard

(56) Documents cités:
- FR-A- 1 385 198
- GB-A- 2 358 678
- US-A- 3 752 543
- US-A1- 2004 131 296
- PATENT ABSTRACTS OF JAPAN vol. 010, no. 273 (M-518), 17 septembre 1986 (1986-09-17) & JP 61 096219 A (NTN TOYO BEARING CO LTD), 14 mai 1986 (1986-05-14)

## Description

### DOMAINE TECHNIQUE

L'invention se rapporte aux paliers à roulement, principalement dans le domaine aéronautique.

Plus particulièrement, l'invention concerne des moyens pour améliorer la lubrification sur une piste de roulement, notamment dans le cas où les deux bagues du palier sont en rotation, c'est-à-dire pour un palier inter arbres.

### ÉTAT DE LA TECHNIQUE ANTÉRIEURE

Les paliers inter arbres sont localisés entre deux arbres rotatifs: constitués de deux bagues solidaires de chacun des arbres et de galets de roulement, ou rouleaux, disposés entre elles, les paliers inter arbres permettent la rotation indépendante de chacun des arbres en minimisant frottements et vibrations. En particulier, dans le cadre d'un turbomoteur d'avion, ce type de palier peut se trouver entre la turbine haute pression et la turbine moyenne pression, monté sur des arbres concentriques tournant dans le même sens ou en sens inverse. La lubrification est alors assurée par une huile de qualité aéronautique qui circule dans le palier le long de chemins prédéterminés. Un exemple est donné par le document GB-A-2 358 678.

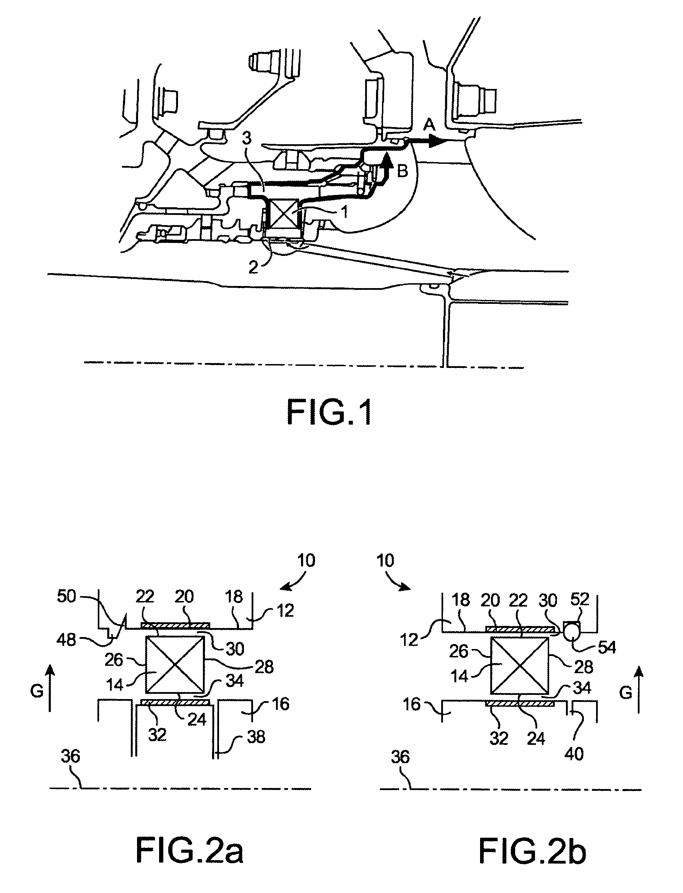

A cet effet, tel qu'illustré par la figure 1, un lubrifiant est injecté sur le rouleau 1 au niveau de la bague interne 2. Un chemin de passage A, B est défini : en particulier grâce à la force centrifuge, l'huile circule le long du rouleau 1, atteint la surface intérieure de la bague externe 3, et est évacuée le long de la surface intérieure vers les chemins de passage A, B. Dans le cadre de la figure 1, une partie circule en amont A et une partie vers l'aval B, de chaque côté des galets 1.

Dans un roulement en fonctionnement normal, les corps roulants 1, 2, 3 sont séparés par un film d'huile dont l'épaisseur est fonction des conditions de fonctionnement du palier (comme la pression de contact, la vitesse relative des corps roulants, les caractéristiques de piézoviscosité du lubrifiant) et qui permet de limiter la dégradation surfacique résultant du mouvement relatif, par exemple par échauffement. Habituellement, l'entrée du contact entre bague externe et rouleau est considérée comme suffisamment alimentée (en effet, l'épaisseur du film surfacique est souvent plus de vingt fois supérieure à celle du film hydrodynamique au centre du contact) ; cependant, lorsque l'épaisseur du film surfacique se réduit sensiblement, le contact n'est plus suffisamment alimenté en lubrifiant et il en résulte une réduction de la hauteur du film hydrodynamique : on est en présence d'un phénomène de sous alimentation. Deux origines principales peuvent être identifiées pour une telle sous alimentation :
- Dans un roulement haute vitesse, et principalement dans le cas des paliers à rouleaux, la fréquence de passage des corps roulants sur la piste de roulement entraîne que le film surfacique ne retrouve pas sa valeur nominale entre deux passages des rouleaux. A haute fréquence, il s'ensuit une réduction sensible de la hauteur du film hydrodynamique.
- Si pour une bague stationnaire, l'épaisseur du film surfacique est principalement fonction des caractéristiques de tension superficielle du fluide, lorsque la bague externe est en rotation, l'épaisseur du film surfacique devient en outre également une fonction du champ centrifuge, des caractéristiques du fluide et de la distance du point considéré par rapport aux orifices d'évacuation (situés de part et d'autre de la piste de roulement).

Les roulements à rouleaux inter arbres, en particulier lorsque les arbres sont contrarotatifs, sont donc un terrain propice à l'apparition de phénomènes de sous alimentation, notamment les paliers utilisés en aéronautique au vu des vitesses de rotation impliquées.

Par ailleurs, un bon dimensionnement d'un roulement haute vitesse consiste à ménager un circuit de retour d'huile suffisamment perméable afin que l'huile ne puisse s'accumuler sur la piste, ce qui aurait pour conséquence une augmentation inacceptable de la puissance dissipée.

La compensation de la sous-alimentation en lubrifiant pour un palier inter arbres est donc un enjeu pour le fonctionnement optimal par exemple d'un turboréacteur.

Ce problème est évoqué également pour les roulements à billes (voir FR 1 385 198), avec une optimisation de la forme de la gorge formant chemin de roulement de la bille.

### EXPOSÉ DE L'INVENTION

L'invention se rapporte sous l'un de ses aspects à un palier à roulement susceptible de pallier les inconvénients issus de la sous-alimentation en lubrifiant, parmi autres avantages.

En particulier, cette invention concerne un procédé permettant de doser la quantité de lubrifiant disponible pour la formation du film d'huile tout en conservant une évacuation optimale afin de maîtriser l'évolution de la puissance dissipée par le roulement.

Plus particulièrement, l'invention, sous l'un de ses aspects, concerne un palier à roulement comprenant une bague interne, une bague externe et un ensemble de rouleaux, constitué par exemple de galets séparés répartis dans une cage, tels que, lorsque ces trois éléments sont en position fonctionnelle, l'un dans l'autre, une rotation libre de chacun est possible. La bague externe possède sur sa surface intérieure une irrégularité, située hors de la piste de roulement, qui peut servir d'obstacle à un fluide lubrifiant s'écoulant le long de cette surface intérieure. Ainsi, lors de la rotation des bagues et galets de roulement, l'huile de lubrification ne peut pas s'écouler librement hors de la zone potentielle de contact, et une partie est obligée de se diriger axialement sur la piste de roulement, dans le jeu entre rouleau et surface intérieure de la bague externe, accroissant par là la quantité d'huile disponible pour former le film de lubrification.

Le palier à roulement selon l'invention est particulièrement avantageux pour les paliers inter arbres utilisés en aéronautique, notamment dans les turbomoteurs, car la solution proposée peut fonctionner quelle que soit la température, et aux vitesses de rotation relative élevées impliquées. L'invention concerne ainsi un arbre ou une turbomachine ainsi équipés.

De façon préférée, l'irrégularité est constituée d'une protubérance faisant saillie sur la surface intérieure à proximité de l'ensemble de rouleaux, juste à l'amont de la piste dans le sens de circulation du lubrifiant. La protubérance peut comporter des crans séparés par des passages pour le lubrifiant, mais est de préférence composée d'une saillie circulaire autour de la surface intérieure de la bague externe. De façon préférée, la protubérance est formée intégralement avec la bague, par exemple par forgeage, et un dégagement en creux peut lui être adjacent pour en faciliter la fabrication.

Il est possible également d'avoir un obstacle sur le chemin aval de circulation du fluide lubrifiant.

A cet égard par ailleurs, et pour des facilités de montage, en particulier dans le cadre d'un palier inter arbres destiné à un turbomoteur, il peut être préférable de créer l'obstacle en deux parties : la surface intérieure de la bague externe peut comporter une rainure localisée à proximité des rouleaux, dans laquelle s'insère par exemple une rondelle en élastomère qui fait saillie de la surface intérieure.

Sous un autre aspect, l'invention concerne un procédé pour améliorer la lubrification d'un palier à roulement comprenant la création d'un obstacle à l'écoulement du fluide de lubrification, de façon à le forcer à se diriger sur la piste de roulement extérieure, entre rouleau et bague externe.

### BRÈVE DESCRIPTION DES DESSINS

D'autres caractéristiques et avantages apparaîtront dans les exemples ci-dessous, donnés bien entendu à titre illustratif et non limitatifs, en référence aux figures annexées.
La figure 1, déjà décrite, présente un schéma de circulation classique de l'huile de lubrification dans un palier inter arbres d'un turbomoteur.
Les figures 2a et 2b montrent des paliers à roulement selon des modes de réalisation de l'invention.
Les figures 3a et 3b illustrent le principe de l'écoulement du lubrifiant sans et avec obstacle.
Les figures 4a et 4b présentent des schémas de circulation de l'huile de lubrification avec un palier inter arbres selon l'invention remplaçant le palier de la figure 1.

### EXPOSÉ DÉTAILLÉ DE MODES DE RÉALISATION PARTICULIERS

Tel que représenté schématiquement sur les figures 2, un palier à roulement à rouleaux cylindriques 10 comprend de façon classique une bague externe 12, un ensemble de rouleaux 14 et une bague interne 16.

La bague externe 12 est de forme générale tubulaire. Sa surface intérieure 18 définit une cavité sensiblement cylindrique dans laquelle sont localisés les rouleaux 14 et la bague interne 16. La surface intérieure 18 présente une première piste de roulement 20 au niveau de laquelle tourne l'ensemble 14 lors du fonctionnement du palier 10. La première piste de roulement 20 est dimensionnée de façon à prendre en compte le déplacement axial des rouleaux 14 lors du fonctionnement du palier 10.

De façon générale, les rouleaux 14 se présentent sous la forme de galets de roulement, de section sensiblement rectangulaire dans un plan contenant l'axe de rotation. L'ensemble 14 constitué par les galets présente une surface externe 22 qui est complémentaire de la première piste de roulement 20, ou piste extérieure, bien que normalement moins large, une surface interne 24 qui lui est opposée et deux côtés 26, 28, en amont et en aval d'une circulation éventuelle de lubrifiant. Le diamètre de l'ensemble 14 des galets au niveau de sa surface externe 22 est généralement légèrement inférieur au diamètre de la piste de roulement 20, définissant un jeu 30 ; l'épaisseur du jeu 30 est cependant suffisamment faible pour éviter les vibrations et assurer le fonctionnement du palier à roulement 10.

La surface interne 24 de l'ensemble de rouleaux 14 se trouve en regard d'une seconde piste de roulement 32 localisée sur la surface extérieure de la bague interne 16, qui est de forme générale cylindrique. De la même façon, un jeu 34 existe entre la deuxième piste de roulement 32 et les galets 14.

Le palier 10 permet une rotation relative entre deux pièces solidarisées aux bagues externe 12 et interne 16: par exemple, la bague interne 16 est solidarisée à un arbre rotatif autour de l'axe 36, et les rouleaux 14 servent d'interface pour en découpler la deuxième pièce solidarisée avec la bague externe 12. Dans le cas d'un palier inter arbres, les deux bagues 12, 16 sont couplées à des arbres rotatifs coaxiaux, et l'ensemble 14 permet aux deux arbres, c'est-à-dire aux deux bagues 12, 16, de tourner autour de l'axe 36 de façon indépendante, dans le même sens ou non, en limitant vibrations et friction. Dans un turbomoteur d'avion notamment, les deux arbres couplés aux bagues 12 et 16 sont contrarotatifs ; en particulier, la fréquence de passage d'un galet 14 au niveau d'un point de la première piste de roulement 20 peut atteindre 5000 à 9000 Hz.

Lors du fonctionnement du palier 10, du fait de la rotation de chaque élément le constituant, une force centrifuge G est créée, qui tend à éloigner chaque élément de l'axe 36, et le jeu 30 entre surface externe 22 des rouleaux 14 et première piste de roulement 20 est très sollicité.

Afin d'éviter une détérioration des surfaces externe 22 de chaque rouleau 14 et intérieure 18 de la bague 12, ainsi que pour limiter l'échauffement dû à la vitesse de rotation, un lubrifiant est utilisé. En raison des températures et vitesses de fonctionnement dans un turbomoteur, une huile de lubrification est préconisée, dont les caractéristiques sont connues du domaine aéronautique.

Des arrivées sont donc prévues pour amener l'huile de lubrification le long des rouleaux 14 et sur la surface intérieure 18 de la bague externe 12, notamment sur la piste de roulement 20 dans le jeu 30. En raison de la force centrifuge G et du déplacement radial du lubrifiant loin de l'axe 36, il est souhaitable que les arrivées de lubrifiant se situent au niveau de la bague interne 16, ou directement dans l'espace entre les deux bagues 12, 16. Des chemins de passage de l'huile pour assurer l'écoulement du lubrifiant sont prévus au niveau de la bague externe 12, ou plus souvent dans la pièce qui y est solidarisée ; ils peuvent prendre différentes formes, mais concernent principalement un écoulement amont A et/ou aval B.

Différentes géométries pour les arrivées existent, illustrées à titre d'exemples dans les figures 2a et 2b. Dans la figure 2a, des ouvertures 38 sont localisées au niveau de la deuxième piste de roulement 32, de chaque côté des rouleaux 14. De cette façon, l'huile peut circuler le long de chaque côté 26, 28 des galets 14, et mener par exemple aux deux chemins de passage A, B représentés sur la figure 1. Sur la figure 2b, une ouverture 40 est localisée sur la surface extérieure de la bague 16. L'huile dans ce cas circule préférentiellement sur un côté aval 28 du rouleau 14. Il est bien sûr envisageable d'avoir deux ouvertures 40 sur la surface extérieure, ou une seule ouverture 38 dans la piste de roulement, ou tout autre combinaison de ces solutions.

En simplifiant, on peut dire qu'il est prévu que le flux de lubrifiant, lorsque l'huile arrive sur la surface intérieure 18 de la bague externe 12, se sépare en deux avant l'entrée dans le chemin de passage, une partie se dirigeant axialement dans le jeu 30 sur la piste de roulement 20. Tel qu'il est schématisé sur la figure 1, en raison de la vitesse de rotation en particulier, il apparaît que, rapidement, le flux suit uniquement le chemin de passage A ou B ; si un film d'huile résiduel d'épaisseur minimale (moins de 20 µm) reste sur les rouleaux 14 grâce aux tensions surfaciques, en raison du passage répété des galets 14, la piste de roulement 20 finit par s'assécher et la lubrification fait défaut.

Or, pour contrer cette sous-alimentation, il apparaît impossible de supprimer le chemin de passage principal et de forcer la totalité du flux à se diriger dans le jeu 30: un bourrage se crée, et la puissance dissipée, directement reliée à la quantité de lubrifiant en surface, devient inconciliable avec un fonctionnement normal du palier 10.

Selon l'invention, il est proposé d'organiser une circulation axiale obligatoire du débit de lubrification à travers le jeu 30 : ainsi, la quantité d'huile présente sur la piste de roulement 20 est modulée, et on évite les conséquences de la sous-alimentation du contact.

Pour organiser cette circulation axiale obligatoire, un obstacle à l'écoulement normal de l'huile est créé. Il peut se localiser à l'amont de l'écoulement, ou à l'aval, éventuellement de chaque côté, suivant les chemins d'écoulement A, B prédéfinis et les conditions de fabrication et d'utilisation. Dans chacun des cas, il s'agit de créer un ressaut 42 sur la surface intérieure 18 de la bague externe 12 sur laquelle l'huile circule, son flux étant alors partiellement bloqué par le ressaut et donc refluant vers l'espace localisé entre la bague et le galet. En particulier, cette solution permet en outre d'utiliser la force centrifuge G générée par la rotation de la bague externe 12 pour accroître son efficacité.

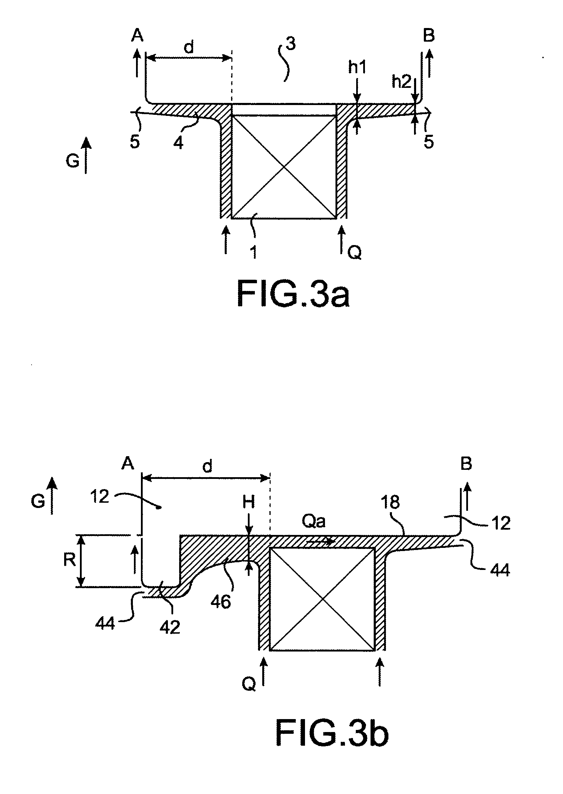

Une illustration du principe est donnée dans les figures 3a et 3b. La figure 3a montre les différents paramètres de lubrification dans un roulement classique comprenant un galet 1 le long duquel un lubrifiant 4 s'écoule avec un débit Q ; par commodité, les deux chemins A et B sont représentés symétriques par rapport au galet 1. Au niveau de la bague externe 3, le lubrifiant est forcé latéralement vers des évacuations 5 séparées du galet 1 par une distance d. On note que l'épaisseur du film de lubrifiant 4 sur la bague externe 3 diminue de h1 au niveau du galet 1 jusque h2 au niveau du point d'évacuation 5. L'épaisseur h2 est directement reliée au débit Q de lubrifiant injecté, à la force centrifuge G créée (c'est-à-dire à la vitesse de rotation relative entre rouleau 1 et bague 3), aux paramètres du lubrifiant (masse volumique ρ₁ et viscosité ν₁), et à la distance d : h1 ≥ h2 = f (Q, G, ρ₁, ν₁, d).

La figure 3b illustre un cas selon l'invention où un ressaut 42 est localisé entre un des points d'évacuation 44 et le galet 14, qui sont séparés par une distance d. Dans ce cas, le film d'huile 46 sur la bague externe 12 atteint une épaisseur de l'ordre de la hauteur R du ressaut 42 à son niveau. La hauteur R est choisie très supérieure à h1 ; donc la hauteur H du film d'huile au niveau du galet 14 en présence du ressaut 42 est supérieure à la hauteur habituellement obtenue h1 : H = f (R, Q, G, ρ₁, ν₁, d). Il peut ainsi y avoir création d'un débit axial Qa entre rouleau 14 et surface de roulement 18, la valeur du débit Qa étant elle aussi déterminée par la hauteur H, le débit Q et la force G.

La hauteur R du ressaut peut être déterminée en fonction de la distance d et de la hauteur H du film renforcé de lubrifiant 46 que l'on souhaite obtenir pour un débit Qa, c'est-à-dire la quantité de lubrifiant nécessaire pour réaliser une lubrification efficace : l'épaisseur de lubrifiant dans le jeu (son débit Qa) influe directement sur la puissance dissipée. La hauteur H est ainsi prédéterminée par calculs, et validée expérimentalement afin de ne pas trop perturber le fonctionnement du palier par brassage. A certaines vitesses notamment, un débit dans les circuits principaux A, B est conservé, par exemple si l'épaisseur de lubrifiant totale génère un brassage d'huile excessif lors de fonctionnements à faible charge. L'obstacle 42 fait typiquement, pour des paliers inter arbres aéronautiques, de l'ordre de 1/10 mm jusque 1 mm.

L'une des possibilités pour créer l'obstacle 42 est de prévoir une protubérance 48 telle que schématisée sur la figure 2a sur la surface intérieure 18 de la bague externe 12. Avantageusement, la protubérance 48 est située à une distance de la piste de roulement 20 inférieure à la largeur des rouleaux 14, de préférence de l'ordre de la moitié de la largeur d'un galet 14 ; la largeur d'un galet 14 est prise sur sa surface externe 22 dans le sens de l'axe 36 du roulement.

Par piste de roulement, il faut comprendre la piste où les rouleaux 14 sont susceptibles d'évoluer au cours d'un fonctionnement normal : une piste de roulement 20, 32 est de fait de largeur supérieure à la face correspondante du galet 14 pour tenir compte de son déplacement axial occasionné par les vitesses et forces en jeu, et la distance définie ci-dessus entre la protubérance 48 et la piste de roulement est inférieure à la distance d définie précédemment. Ainsi par exemple, pour un galet 14 de surface externe 22 comprise entre 8 et 14 mm de large, le déplacement axial peut atteindre 6 mm, et la piste de roulement 20 a donc une largeur supérieure à 15 mm. La protubérance 48 est localisée hors de la piste de roulement 20, avec une marge de sécurité de l'ordre de 3 à 4 mm environ, normalement inférieure à la largeur du galet 14, de préférence inférieure à 4 à 7 mm, c'est-à-dire la moitié de sa largeur.

La protubérance 48 peut être constituée de crans séparant des passages pour le lubrifiant. Avantageusement cependant, la protubérance 48 est identique tout autour de la bague, c'est-à-dire qu'elle se présente sous la forme d'une saillie régulière. Bien qu'il soit possible de rapporter un élément annexe sur la surface intérieure 18, il est préférable que la protubérance 48 soit formée d'une seule pièce avec la bague externe 12. L'une des possibilités est le forgeage, le tournage ou la rectification. Pour faciliter la fabrication de la saillie 48, il est possible d'avoir un dégagement en creux 50 issu du procédé d'obtention, avantageusement localisé entre la protubérance 48 et la première piste de roulement 20, tel qu'illustré sur la figure 2a.

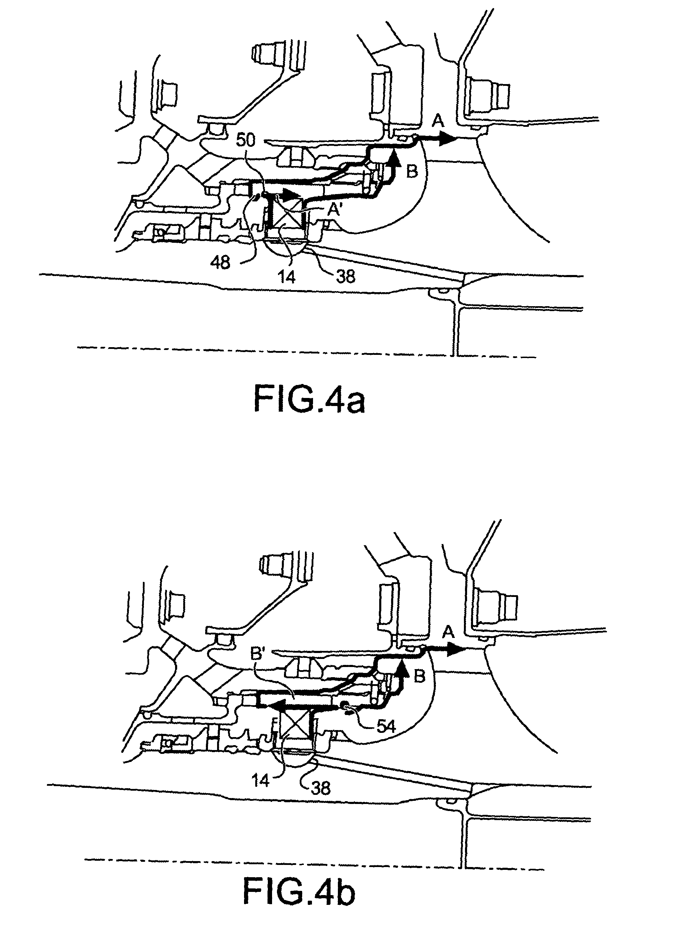

Avantageusement, une telle protubérance 48 est localisée en amont du rouleau 14. Dans ce cas, et tel qu'illustré sur la figure 4a, le lubrifiant destiné au chemin amont A se heurte à la protubérance 48. Une partie reflue alors et suit le chemin aval A' localisé dans le jeu 30, alors que le reste continue dans le chemin A. Tel que précisé auparavant, la quantité relative de lubrifiant entre les deux chemins A, A' dépend de la hauteur de la saillie 48, ainsi que de la vitesse de rotation, tout comme de la nature de l'huile (température, viscosité,...) .

La protubérance 48 peut également se localiser sur le chemin aval B. Dans ce cas, et de la même façon, le lubrifiant s'écoulant vers l'aval est refoulé par la protubérance pour se diriger axialement et vers l'amont dans le jeu 30 (figure 4b). On note sur la figure 4b l'absence de lubrifiant sur le côté amont 26 du rouleau 14: ceci dépend de l'agencement des arrivées 38, 40 de lubrifiant, et n'influe en rien le fonctionnement de l'invention; une combinaison des deux solutions est envisageable.

Tel qu'évoqué par la figure 4b, l'obstacle peut avoir une forme différente de celle décrite dans la figure 2a. De fait, dans le cadre en particulier d'un moteur d'aéronef, le palier inter arbres est monté par insertion des galets 14 dans la bague extérieure 12 par l'aval (en considérant le sens du chemin de passage). La présence d'un ressaut peut alors rendre la mise en place du palier 10 difficile. Une solution est d'avoir un ressaut en deux parties, comme illustré sur la figure 2b. Une encoche 52 est ainsi créée dans la surface intérieure 18 de la bague 12 ; avantageusement, cette encoche 52 est une rainure circulaire, par exemple de section rectangulaire, s'étendant tout autour de la surface intérieure 18. Dans la rainure est inséré, après ou avant montage, un élément 54 faisant saillie. Avantageusement, l'élément faisant saillie peut être une rondelle en élastomère 54 : un tel obstacle souple permet le passage des galets 14 lors de l'assemblage des rotors d'un moteur par exemple.

Les différents modes de réalisation, comme déjà précisé, ne sont donnés qu'à titre indicatif, et toute alternative et/ou combinaison peuvent être envisagée : l'invention se rapporte de fait à un procédé pour améliorer la lubrification d'un palier inter arbres par la création d'un obstacle à l'écoulement normal et ainsi d'une régulation de l'écoulement du fluide lubrifiant sur la bague externe. Les différentes possibilités pour créer l'obstacle entrent dans le cadre de l'invention.

## Revendications

1. Palier à contact de roulement (10) comprenant :
- une bague externe (12) présentant une surface intérieure (18) délimitant une cavité généralement cylindrique et comprenant une première piste de roulement (20) ;
- une bague interne (16) présentant une surface extérieure généralement cylindrique comprenant une deuxième piste de roulement (32) ;
- un ensemble de rouleaux (14) présentant une surface externe (22) de forme complémentaire de la première piste de roulement (20), tels que, en position fonctionnelle, lorsque les rouleaux (14) sont placés entre la première et la deuxième piste de roulement (20, 32), chacun des rouleaux (14), bague externe (12) et bague interne (16) est susceptible de tourner librement autour de son axe de rotation ;
**caractérisé en ce que** la bague externe (12) comprend une protubérance (48, 54) localisée sur sa surface intérieure (18) latéralement par rapport à la première piste de roulement (20), et **en ce que** la bague interne (16) comprend au moins une arrivée de fluide lubrifiant (38, 40).

2. Palier à contact de roulement (10) selon la revendication 1 dans lequel la protubérance (48,54) est située à une distance de la première piste de roulement (20) inférieure ou égale à la moitié de la largeur de la surface externe (22) des rouleaux (14).

3. Palier à contact de roulement selon la revendication 2 dans lequel la protubérance (48) est sous la forme d'une saillie continue selon le pourtour de la cavité sur la surface intérieure (18).

4. Palier à contact de roulement selon l'une des revendications 2 ou 3 dans lequel la protubérance (48) est formée de manière unitaire avec la bague externe (12).

5. Palier à contact de roulement selon l'une des revendications 2 à 4 comprenant en outre un dégagement en creux (50) adjacent à la protubérance (48) du côté de la première piste de roulement (20).

6. Palier à contact de roulement selon l'une des revendications 2 ou 3 dans lequel la protubérance (48) est sous la forme d'une rondelle élastique (54) localisée dans une rainure (52) formée sur la surface intérieure (18) selon le pourtour de la cavité.

7. Palier à contact de roulement selon l'une des revendications 1 à 6 comprenant une encoche (52) située sur la surface intérieure (18) de la bague externe (12) à une distance de la première piste de roulement (20) inférieure ou égale à la moitié de la largeur de la surface externe (22) des rouleaux (14).

8. Palier à contact de roulement selon la revendication 7 dans lequel l'encoche (52) est sous la forme d'une rainure continue selon le pourtour de la cavité sur de la surface intérieure (18).

9. Palier à contact de roulement selon la revendication 8 comprenant en outre une rondelle élastique (54) susceptible d'être localisée dans la rainure (52) et de s'y maintenir.

10. Arbre équipé d'un palier à contact de roulement selon l'une des revendications 1 à 9.

11. Turbomachine comportant un arbre selon la revendication 10.

12. Procédé de lubrification d'un palier à contact de roulement inter arbres (10) selon la revendication 1 composé d'une bague externe (12), d'une bague interne (16) et d'un ensemble de rouleaux (14), une surface externe (22) de chaque rouleau (14) tournant en face d'une piste de roulement (20) définie dans la surface intérieure (18) de la bague externe (12), comprenant la mise en place d'un obstacle protubérant (42) sur la surface intérieure (18) de la bague externe (12) du palier (10), de façon à bloquer partiellement le flux d'un lubrifiant en organisant une circulation axiale du débit de lubrification à travers le jeu (30) entre surface externe (22) des rouleaux (14) et première piste de roulement (20).

## Claims

1. A rolling-contact bearing (10) including:
- an outer bush (12) having an inner surface (18) delimiting a generally cylindrical cavity and including a first roll track (20);
- an inner bush (16) having a generally cylindrical outer surface including a second roll track (32);
- a roller unit (14) having an outer surface (22) of a shape complementary to the first roll track (20);
such that, in the operating position, when the rollers (14) are placed between the first and second roll tracks (20, 32), each of the rollers (14), outer bush (12) and inner bush (16) is able to rotate freely around its axis of rogation;
**characterised in that** the outer bush (12) includes a protuberance (48, 54) located on its inner surface (18) laterally relative to the first roll track (20) and **in that** the inner bush (16) includes at least one lubricant fluid inlet (38, 40).

2. A rolling-contact bearing (10) according to claim 1 wherein the protuberance (48, 54) is located at a distance from the first roll track (20) lower than or equal to half the width of the outer surface (22) of the rollers (14).

3. A rolling-contact bearing according to claim 2 wherein the protuberance (48) is in the form of a continuous projection along the periphery of the cavity over inner surface (18).

4. A rolling-contact bearing according to one of claims 2 and 3 wherein the protuberance (48) is formed unitarily with the outer bush (12).

5. A rolling-contact bearing according to one of claims 2 to 4 additionally including a trough clearance (50) adjacent to the protuberance (48) on the side of the first roll track (20).

6. A rolling-contact bearing according to one of claims 2 to 3 wherein the protuberance (48) is formed by an elastic washer (54) located in a continuous groove (52) along the periphery of a cavity on inner surface (18).

7. A rolling-contact bearing according to one of claims of 1 to 6 including a slot (52) located on the inner surface (18) of the outer bush (12) at a distance from the first roll track (20) less than or equal to half the width of the outer surface (22) of the rollers (14).

8. A rolling-contact bearing according to claim 7 wherein the slot (52) is in the form of a continuous groove along the periphery of the cavity on inner surface (18).

9. A rolling-contact bearing according to claim 8 additionally including an elastic washer (54) able to be located in the groove (52) and to be held therein.

10. Shaft comprising a rolling-contact bearing according to one of the claims 1 to 9.

11. Turbine engine comprising a shaft according to claim 10.

12. Process for lubricating an inter-shaft rolling-contact bearing (10) consisting of an outer bush (12), an inner bush (16) and a roller unit (14), an outer surface (22) of each roller (14) rotating opposite a roll track (20) defined in the inner surface (18) of the outer bush (12), including the installation of a protuberant obstacle (42) on the inner surface (18) of the outer bush (12) of the bearing (10), so as to block partially the flow of a lubricant by organising a mandatory axial circulation of the flow of lubricant through the clearance (30) between the outer surface (22) of the rollers (14) and the first roll track (20).

## Patentansprüche

1. Lager (10) mit Wälzkontakt, das aufweist:
- einen äußeren Ring (12) mit einer Innenfläche (18), die einen allgemein zylindrischen Holraum abgrenzt und eine erste Wälzpiste (20) aufweist;
- einen inneren Ring (16) mit einer allgemein zylindrischen Außenfläche, die eine zweite Wälzpiste (32) aufweist;
- eine Einheit von Walzen (14), die eine Außenfläche (22) mit zu der ersten Wälzpiste (20) komplementären Form aufweisen, so dass, wenn in Funktionsposition die Walzen (14) zwischen der ersten und der zweiten Wälzpiste (20, 32) angeordnet sind, sich die Walzen (14), der äußere Ring (12) und der innere Ring (16) jeweils frei um ihre Drehachse drehen können;
**dadurch gekennzeichnet, dass** der äußere Ring (12) eine Protuberanz (48, 54) aufweist, die an seiner inneren Fläche (18) seitlich bezüglich der ersten Wälzpiste (20) lokalisiert ist, und dass der innere Ring (16) wenigstens eine Zuleitung für Schmierfluid (38, 40) aufweist.

2. Lager (10) mit Wälzkontakt nach Anspruch 1, bei welchem die Protuberanz (48, 54) in einem Abstand von der ersten Wälzpiste (20) liegt, der kleiner oder gleich der Hälfe der Breite der äußeren Fläche (22) der Walzen (14) ist.

3. Lager mit Wälzkontakt nach Anspruch 2, bei welchem die Protuberanz (48) in Form eines kontinuierlichen Vorsprungs entlang dem Umfang des Hohlraums an der inneren Fläche (18) vorliegt.

4. Lager mit Wälzkontakt nach einem der Ansprüche 2 oder 3, bei welchem die Protuberanz (48) auf einheitliche Weise mit dem äußeren Ring (12) ausgebildet ist.

5. Lager mit Wälzkontakt nach einem der Ansprüche 2 bis 4, das ferner eine hohle Aussparung (50) angrenzend an die Protuberanz (48) an der Seite der ersten Wälzpiste (20) aufweist.

6. Lager mit Wälzkontakt nach einem der Ansprüche 2 oder 3, bei welchem die Protuberanz (48) in Form einer elastischen Scheibe (54) in einer Nut (52) lokalisiert ist, die an der inneren Fläche (18) entlang dem Umfang des Hohlraums ausgebildet ist.

7. Lager mit Wälzkontakt nach einem der Ansprüche 1 bis 6, das eine Kerbe (52) aufweist, die an der inneren Fläche (18) des äußeren Rings (12) in einem Abstand von der ersten Wälzpiste (20) liegt, der kleiner oder gleich der Hälfe der Breite der äußeren Fläche (22) der Walzen (14) ist.

8. Lager mit Wälzkontakt nach Anspruch 7, bei welchem die Kerbe (52) in Form einer kontinuierlichen Nut entlang dem Umfang des Hohlraums an der inneren Fläche (18) vorliegt.

9. Lager mit Wälzkontakt nach Anspruch 8, das ferner eine elastische Scheibe (54) aufweist, die in der Nut (52) lokalisiert sein und sich dort halten kann.

10. Welle, die mit einem Lager mit Wälzkontakt nach einem der Ansprüche 1 bis 9 ausgestattet ist.

11. Turbomaschine, die eine Welle nach Anspruch 10 aufweist.

12. Verfahren zum Schmieren eines Zwischenwellen-Lagers (10) mit Wälzkontakt nach Anspruch 1, das aus einem äußeren Ring (12), einem inneren Ring (16) und einer Einheit von Walzen (14) besteht, wobei sich eine äußere Fläche (22) jeder Walze (14) gegenüber einer Wälzpiste (20) dreht, die in der inneren Fläche (18) des äußeren Rings (12) gebildet ist, welches das Einsetzen eines vorstehenden Hindernisses (42) an der inneren Fläche (18) des äußeren Rings (12) des Lagers (10) umfasst, so dass der Strom eines Schmiermittel teilweise blockiert wird, indem eine axiale Zirkulation des Schmiermitteldurchsatzes über das Spiel (30) zwischen äußerer Fläche (22) der Walzen (14) und erster Wälzpiste (20) bewirkt wird.
